# EUROPEAN PATENT APPLICATION

(11) **EP 4 817 792 A2**
(43) Date of publication of application: **07.10.2026**
(21) Application number: 26168605.9
(22) Date of filing: 27.03.2026
(51) Int. Cl.: B23Q 39/02, B23Q 3/155

(54) **MACHINE TOOLS**

(30) Priority: 01.04.2025 KR 20250042405
(71) Applicant: DN Solutions Co., Ltd., Changwon-si, Gyeongsangnam-do 51537 (KR)
(72) Inventor: Jeong, Seonghoon, 51537 Changwon-si,Gyeongsangnam-do (KR)
(74) Representative: BCKIP Part mbB

(57) **Abstract**

The present invention relates to a machine tool that, by means of an optimized layout capable of performing multi-axis two-system machining, can precisely and rapidly carry out six-face machining of both ordinary and large workpieces using two spindles in a single step and a single process, thereby achieving compactness.

## Description

### [FIELD OF THE DISCLOSURE]

The present invention relates to a machine tool, more particularly to a machine tool having an optimized layout capable of performing multi-axis two system machining, wherein both ordinary materials and large workpieces can be precisely and rapidly six-face machined using two spindles in a single step and a single process, thereby achieving compactness.

### [BACKGROUND OF THE DISCLOSURE]

Generally, a machine tool refers to a machine used for the purpose of machining metal or non-metal workpieces into desired shapes and dimensions by employing suitable tools, using various cutting or non-cutting machining methods.

Turning centers, vertical/horizontal machining centers, bridge-type machining centers, Swiss-type turning, EDM machines, horizontal NC boring machines, CNC lathes, multitasking machine tools, and various other types of machine tools are widely used in diverse industrial environments in accordance with the specific purposes of the respective operations.

In machine tools, a multitasking machine refers to a turning center equipped with a multi-function automatic tool changer (ATC) and a tool magazine that performs machining operations of various types such as turning, drilling, tapping, and milling.

In a multitasking machine, the operator manually mounts the tool required for machining into the tool magazine when loading or exchanging the tool.

Generally, the various types of machine tools currently in use are equipped with a control panel on which numerical control (NC) or computerized numerical control (CNC) technology is applied. The control panel is equipped with various function switches or buttons and a monitor.

Further, the machine tool includes a table that transports the mounted workpiece material for machining, a pallet that prepares the workpiece prior to machining, a spindle in which a tool or workpiece is coupled and rotates, and a tailstock, a steady rest, etc., for supporting the workpiece during machining.

Generally, machine tools provide a transfer unit that moves along the feed axis for the table, tool post, spindle, tailstock, steady rest, etc., to perform various machining operations.

Also, a machine tool generally employs a plurality of tools for various machining operations, and a tool magazine or turret is used as a tool storage location that stores the plurality of tools.

Such a machine tool uses a plurality of tools for various machining operations, and a tool magazine is employed as a form of tool storage location that stores the plurality of tools.

Also, machine tools generally are equipped with an automatic pallet changer (APC, Automatic Palette Changer) to minimize non-machining time.

The automatic pallet changer (APC) automatically changes the pallet between the workpiece machining area and the workpiece installation area.

A workpiece can be loaded onto the pallet.

Furthermore, in general, a machine tool is equipped with an automatic tool changer (ATC, Automatic Tool Changer) for retrieving a specific tool from the tool magazine or reloading it as commanded by the numerical control unit in order to improve the productivity of the machine tool. Generally, a machining center refers to a machine tool equipped with an automatic tool changer, etc., which performs a wide range of machining that can be carried out on turning, milling, drilling, boring machines, etc., by exchanging various types of tools, and is broadly divided into a vertical-type machining center and a horizontal-type machining center.

A recent trend in automotive manufacturing technology is a method of producing the material for a vehicle lower frame using a giga casting process to achieve productivity and cost competitiveness. The conventional traditional vehicle lower frame manufacturing method had undergone multiple processes of assembling dozens of body frame parts by individual casting, individual machining, followed by welding, bolting, etc.

The GIGA CASTING method has, with the recent development of large casting equipment, become able to produce one part that corresponds to the fully assembled shape of dozens of existing components in a single casting.

By the introduction of such a GIGA CASTING method, the development of equipment capable of machining not only standard-size but also large-size single CASTINGs has become inevitably required.

Currently, the development of equipment capable of machining a large GIGA CASTING in one step (1SET UP) in a single process is required.

Furthermore, the technology is applicable not only to GIGA CASTING but also to battery trays of electric vehicles (EV) whose demand has recently surged.

As such, battery trays for electric vehicles were previously assembled from multiple components individually, but for the similar reasons mentioned above, there is a growing demand to manufacture the battery tray as a complete shape and to complete machining of the entire shape in a single operation.

Conventional machine tools had various problems when attempting to machine a large material part(one part) on six faces simultaneously using two spindles.

That is, in the case of a conventional C-frame table moving vertical machining center, which is a table moving device, there was a problem that implementing two spindles was impossible.

Even if two spindles are applied to a C-frame table-moving vertical machining center, a single table transports two axes, making it impossible to realize separate and independent machining by the two spindles.

Furthermore, in a conventional column-moving 5-axis vertical machining center, since the spindle is not a two-axis but the rotary table rotates as a two-axis, it can machine up to five faces of a small workpiece, but due to the rotary table C axis drive, six-face machining is impossible, and for large workpieces even five-face machining was impossible.

Furthermore, even a large bridge-type machine among conventional machine tools can perform five-face machining of both small and large workpieces, but six-face machining is inherently impossible, and to achieve five-face machining it requires a very large equipment layout, reducing space utilization, causing customer dissatisfaction, and increasing manufacturing and installation costs.

Therefore, the development of a machine tool having a compact size and capable of machining not only small Machining material but also six faces of large Machining material in one step and one process is urgent.

### [Disclosure]

### [SUMMARY]

The present invention has been made in an effort to solve the above problem, and an object of the present invention is to provide a machine tool in which through an optimized layout capable of performing multiaxis two system machining, can machine not only conventional material but also large machining material while avoiding interference with a table that clamps the material with two spindles, and can perform six-face machining precisely and rapidly either simultaneously or independently with the two spindles to maximize the machining area, the clearance between the two spindles is minimized, thereby improving productivity and precision; and overall to achieve compactness and maximize space utilization.

In order to achieve the object of the present invention, a machine tool comprising: a bed module partitioned into a machining area and a non-machining area; a workpiece module arranged in the machining area of the bed module and configured to be disposed on a workpiece to be machined and to move and rotate the workpiece about a single axis in accordance with a machining process; a first processing module arranged in the non-processing area of the bed module so as to be movable and rotatable along multiple axes independently of the workpiece module and performing processing of the workpiece disposed on the workpiece module; and a second processing module arranged in the non-processing area of the bed module so as to be movable and rotatable along multiple axes independently of the workpiece module and the first processing module and performing processing of the workpiece disposed in the workpiece module simultaneously processing the part processed by the first processing module or separately and independently processing.

Further, in another preferred embodiment of the machine tool according to the present invention, the machine tool may further include a tool change module that stores a plurality of tools and is disposed on each side of the non-processing area of the bed module to perform tool change with the first processing module and the second processing module, respectively.

Further, in another preferred embodiment of the machine tool according to the present invention, the machine tool may further include a cover module disposed on the bed module to partition the machining area and the non-machining area of the bed module. Further, in another preferred embodiment of the machine tool according to the present invention, wherein the workpiece module is configured to move in one fore-aft direction on the bed module and to rotate about an axis orthogonal to the left-right direction to form two axis systems.

Further, in another preferred embodiment of the machine tool according to the present invention, wherein the first machining module and the second machining module each move in three directions of left-right, fore-aft, and up-down, and rotate about the left-right and fore-aft axes in two directions to form a five axes system.

Further, in another preferred embodiment of the machine tool according to the present invention, wherein the workpiece module, the first machining module, and the second machining module each operate independently to perform two-system machining each having seven axes, thereby machining a portion of a large workpiece simultaneously or independently so that the six faces (up-down, left-right, front-back) of the large workpiece are machined with a single set-up and a single process.

Further, in another preferred embodiment of the machine tool according to the present invention may include a bed partitioned into a machining area and a non-machining area; a pair of columns arranged in the non-machining area of the bed, facing each other and each independently movable in one axial direction; a pair of rams each mounted on one of the pair of columns in which each independently movable in two axial directions different from the movement direction of the respective column; a pair of spindles, each positioned at the distal end of one of the pair of rams in which each independently rotatable in two axial directions different from the movement direction of the respective ram; a pair of bases fixedly arranged facing each other in the machining area of the bed; a pair of saddles, each mounted on the pair of bases, facing each other and each independently movable in one axial direction different from the one axial direction of the pair of columns, the two axial directions of the pair of rams and the two axial directions of the pair of spindles; and a rotary table mounted on the pair of saddles, rotatable in one axial direction different from the one axial direction of the pair of columns, the two axial directions of the pair of rams, the two axial directions of the pair of spindles, and the one axial direction of the pair of saddles, on which a workpiece to be machined by the pair of spindles is seated.

Further, in another preferred embodiment of the machine tool according to the present invention, the machine tool may further include a pair of tool changing units, each storing a plurality of tools and fixedly positioned on both sides of the movement direction of the pair of columns in the non-processing area of the bed, respectively, and performing tool changing with the pair of spindles through the movement of the pair of columns.

Further, in another preferred embodiment of the machine tool according to the present invention, wherein the pair of columns each form a single axis system moving in the left-right direction, the pair of rams each form two axis systems moving in the fore-aft and up-down directions, the pair of spindles each form two axis systems rotating about the left-right direction or about the fore-aft direction, the pair of saddles each form a single axis system moving in the fore-aft direction, and the rotary table forms a single axis system rotating in one direction about the left-right direction.

Further, in another preferred embodiment of the machine tool according to the present invention, wherein the pair of columns, the pair of rams, the pair of spindles, the pair of saddles, and the rotary table are each formed according to seven axes and move independently or synchronously to perform machining, thereby machining a portion of a large workpiece simultaneously or independently and performing machining of the six faces (upper, lower, left, right, front, and rear) of the large workpiece in a single setup and a single process.

Further, in another preferred embodiment of the machine tool according to the present invention may comprise a first bed arranged in a non-machining area and a second bed installed in the machining area in a fore-aft direction relative to the first bed;
a first column and a second column arranged on the upper side of the first bed so as to face each other in a left-right direction and each independently movable in a left-right direction; a first ram arranged on the first column so as to be movable in fore-aft and up-down directions and a second ram arranged on the second column so as to be independently movable in fore-aft and up-down directions from the first ram; a first spindle detachably mountable with a first tool and arranged at the distal end of the first ram to rotate about a fore-aft axis or a left-right axis and a second spindle detachably mountable with a second tool and arranged at the distal end of the second ram to rotate about a fore-aft axis and a left-right axis independently of the first spindle; a first base and a second base fixedly disposed on the upper side of the second bed so as to face each other in a left-right direction; a first saddle mounted on the upper side of the first base so as to be movable in a fore-aft direction and a second saddle mounted on the upper side of the second base so as to be movable in a fore-aft direction; and a rotary table positioned between the first and second saddles so as to be rotatable about a left-right axis.

Further, in another preferred embodiment of the machine tool according to the present invention, wherein the first ram is installed on the inner side of the first column in the left-right direction, and the second ram is installed on the inner side of the second column in the left-right direction so as to face each other along the left-right direction.

Further, in another preferred embodiment of the machine tool according to the present invention, wherein the first ram includes a first slide disposed on the inner side of the left-right direction of the first column so as to move along the up-down direction of the first column, and a first ram body that moves in a fore-aft direction relative to the first slide, wherein the second ram includes a second slide disposed on the inner side of the left-right direction of the second column so as to face the first slide, and a second ram body that moves in a fore-aft direction relative to the second slide.

Further, in another preferred embodiment of the machine tool according to the present invention, the machine tool may further include a first tool change unit that stores a plurality of tools and is fixedly arranged on one side of the first bed, wherein the first tool change unit performs tool change with the first spindle by movement of the first column, the first ram, and the first spindle, and a second tool change unit that stores a plurality of tools and is fixedly arranged on the opposite side of the first bed so as to face the first tool change unit in a left-right direction, wherein the second tool change unit performs tool change with the second spindle by movement of the second column, the second ram, and the second spindle.

Further, in another preferred embodiment of the machine tool according to the present invention, wherein the first column and the second column each form an independent single-axis system moving in a left-right direction, the first ram and the second ram each form an independent two-axis system moving independently in a fore-aft direction and an up-down direction, the first spindle and the second spindle each form an independent two-axis system rotating about a left-right axis or about a fore-aft axis, the first saddle and the second saddle each form an independent single-axis system moving in a fore-aft direction, and the rotary table forms a single-axis system rotating in one direction about a left-right axis.

Further, in another preferred embodiment of the machine tool according to the present invention, wherein the first column, first ram, first spindle, first saddles, second saddles and the rotary table are configured in a first system having an independent seven-axis coordinate system, and the second column, second ram, second spindle, first saddles, second saddles and the rotary table are configured in a second system having an independent seven-axis coordinate system that is independent of the first system, so that a portion of a large workpiece can be machined simultaneously or independently, thereby performing machining of the six faces-upper, lower, left, right, front, and rear-of the large workpiece in a single setup and a single process.

Further, in another preferred embodiment of the machine tool according to the present invention, wherein the rotary table comprises a first coupling part rotatably coupled to the first saddle; a second coupling part rotatably coupled to the second saddle; a seating part extending mounted between the first and second coupling part wherein a workpiece to be machined is seated; and a clamping part for clamping the workpiece seated on the seating part.

### [Advantageous Effects]

The machine tool according to the present invention, through an optimized layout that enables multiaxis two-system machining, can avoid interference with the table that clamps the material with two spindles, and thus can precisely and rapidly perform six-face machining with the two spindles, either simultaneously or independently.

Furthermore, the machine tool of the present invention, while performing six-face machining of a large workpiece with two spindles simultaneously or independently, minimizes the spacing between the two spindles to increase the machining range in order to maximize the machining area, thereby improving the versatility and productivity of the machine tool and providing the effect of maximizing the safety and reliability of the machine tool.

Furthermore, the machine tool according to the present invention, through an optimized layout, can perform six-face machining of a large workpiece while, unlike the prior art, achieving equipment compactness to maximize space utilization and reduce manufacturing costs.

The effects of the present invention are not limited to those mentioned above, and other unmentioned effects will be readily understood by a person of ordinary skill in the art from the following description.

### [Description of the Drawings]

FIG. 1 shows a conceptual diagram of a machine tool according to the present invention that can perform processing of two systems each having seven axes.
FIG. 2 and FIG. 3 show a conceptual diagram of a transfer unit that drives seven axis systems, as well as the operation of one axis system moving fore-and-aft of the rotary table and one axis system rotating the rotary table, in the machine tool according to the present invention shown in FIG. 1 with some components removed.
FIG. 4 and FIG. 5 show a conceptual diagram of a state in which a pair of columns of the machine tool according to the present invention move independently along three axis systems.
FIG. 6 shows a conceptual diagram of a state in which a pair of columns of the machine tool according to the present invention each move to perform a tool change.
FIG. 7 shows a conceptual diagram of a state in which the first spindle changes a tool through the first tool change unit, as shown in FIG. 6.
FIG. 8 shows a conceptual diagram of a state in which a pair of spindles of the machine tool according to the present invention rotate about two feed systems to machine the side of a workpiece.

### [Detailed Description of Certain Inventive Embodiment]

Hereinafter, a machine tool according to embodiments of the present invention will be described in detail with reference to drawings. The following exemplary embodiments are provided as examples for fully transferring the spirit of the present invention to those skilled in the art. Therefore, the present invention is not limited to the exemplary embodiments described below and may be specified as other aspects. Further, in the drawings, a size and a thickness of the apparatus may be exaggerated for convenience. Like reference numerals indicate like constituent elements throughout the specification.

The present invention may have various modifications and various embodiments and specific embodiments will be illustrated in the drawings and described in detail in the detailed description. Effects and features of the present invention, and methods for accomplishing the same will be more clearly understood from embodiments described in detail below with reference to the accompanying drawings. However, the present invention is not limited to embodiments disclosed below but may be implemented in various forms. In the following embodiment, the terms such as first, second, etc., are not restrictive meanings but are used for distinguishing one component from other components. Further, a singular form may include a plural form if there is no clearly opposite meaning in the context. Further, the terms such as "include" or "have" mean that there is a feature or a component disclosed in the specification and a possibility that one or more other features or components will be added is not pre-excluded. In addition, in the drawing, for convenience of description, sizes of the components may be exaggerated or reduced. For example, each configuration illustrated in the drawings is arbitrarily shown for understanding and ease of description, but the present invention is not limited thereto.

Advantages and features of the present invention and methods of achieving the advantages and features will be clear with reference to exemplary embodiments described in detail below together with the accompanying drawings. However, the present invention is not limited to the exemplary embodiments disclosed herein but will be implemented in various forms. The exemplary embodiments of the present invention are provided so that the present invention is completely disclosed, and a person with ordinary skill in the art can fully understand the scope of the present invention. The present invention will be defined only by the scope of the appended claims. Like reference numerals indicate like constituent elements throughout the specification. In the drawings, sizes and relative sizes of layers and regions may be exaggerated for clarity of description.

The terms used in the present specification are for explaining the exemplary embodiments, not for limiting the present invention. Unless particularly stated otherwise in the present specification, a singular form also includes a plural form. The terms such as "comprise (include)" and/or "comprising (including)" used in the specification do not exclude presence or addition of one or more other constituent elements, steps, operations, and/or elements, in addition to the mentioned constituent elements, steps, operations, and/or elements.

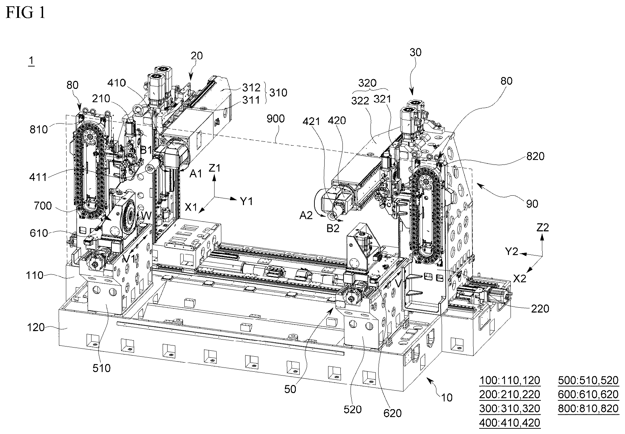

FIG. 1 is a conceptual diagram of a machine tool according to the present invention capable of performing machining with two systems, each having seven axes.

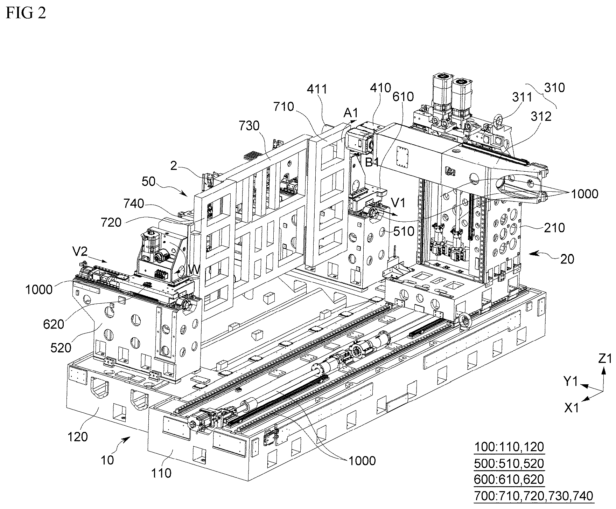

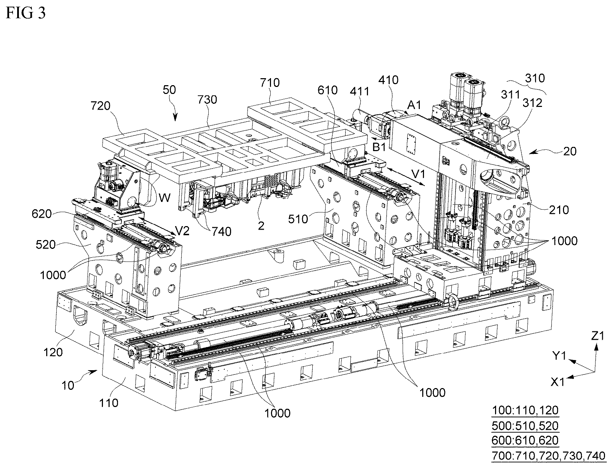

FIG. 2 and FIG. 3 illustrate a conceptual diagram of a transfer unit that drives the operation of one axis moving fore-aft of the rotary table, the operation of one axis rotating the rotary table, and seven axes, with some components of the machine tool according to the present invention shown in FIG. 1 removed.

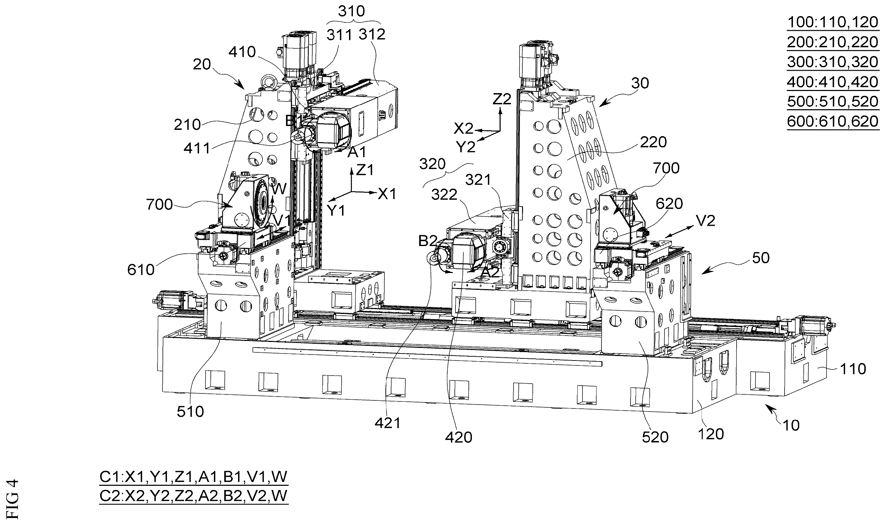

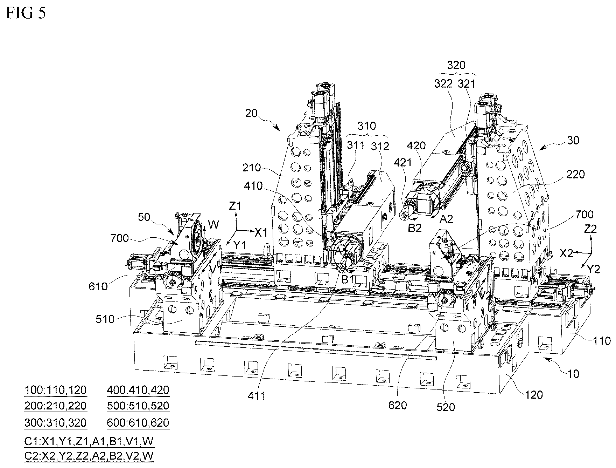

FIG. 4 and FIG. 5 show a conceptual diagram of a state in which a pair of columns of a machine tool according to the present invention move independently of each other along three axes.

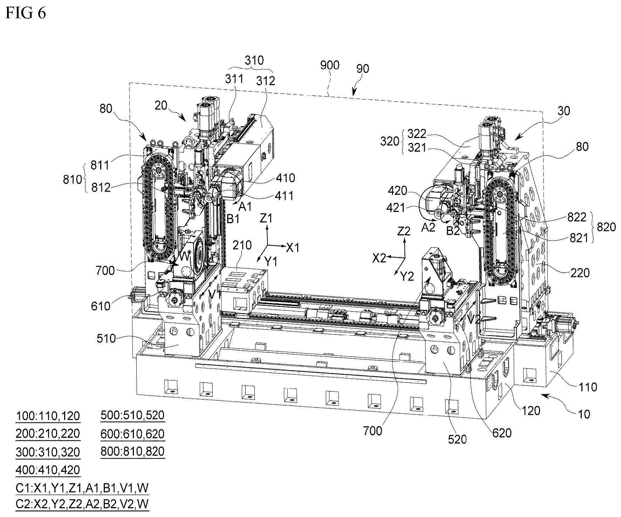

FIG. 6 shows a conceptual diagram of the machine tool of the present invention in which a pair of columns each move to perform a tool change.

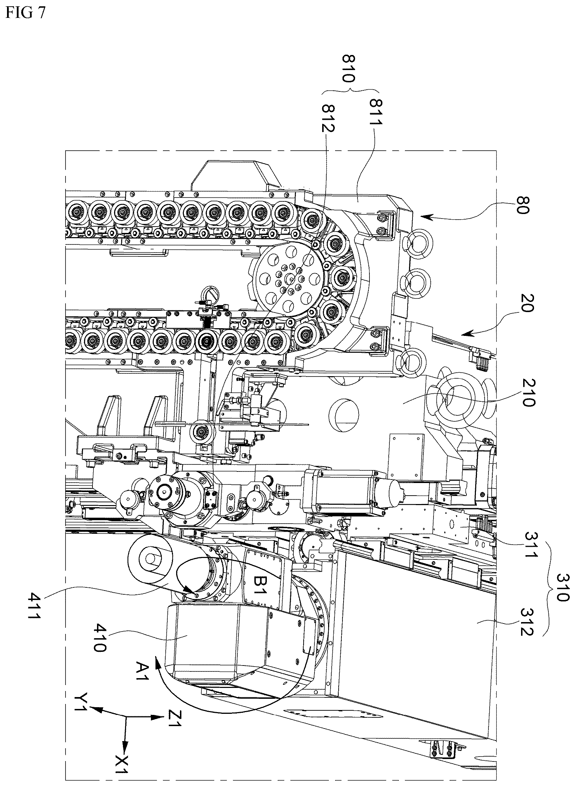

FIG. 7 is a conceptual diagram of the state in which the left spindle changes a tool through the first tool change unit, as shown in FIG. 6.

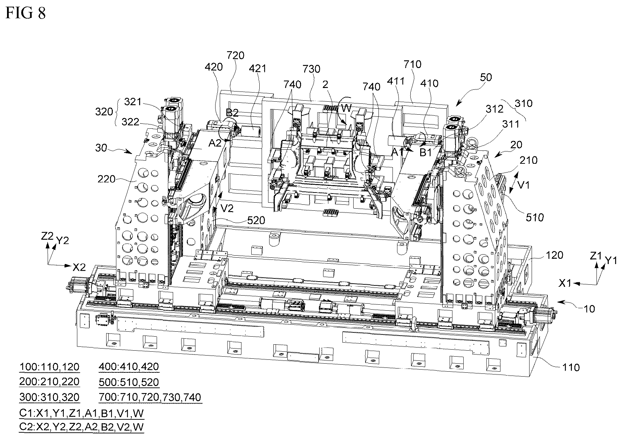

FIG. 8 is a conceptual diagram showing a state in which a pair of spindles of a machine tool according to the present invention rotate about two feed systems to machine the side of a workpiece.

The machine tool according to the present invention will be described with reference to FIGS. 1 to 8.

As shown in FIG. 1 through FIG. 8, the machine tool 1 according to an embodiment of the present invention includes a Bed module 10, a workpiece module 50, a first processing module 20, a second processing module 30, a tool change module 80, and a cover module 90.

The Bed module 10 is partitioned into a machining area and a non-machining area. Thus, the machining area means the area where the workpiece is machined by the first processing module and the second processing module, and the non-machining area means the area where the workpiece is not machined.

Also, the bed module 10 can preferably be formed with the configuration of the bed 100 described below.

The workpiece module 50 is disposed in the machining area of the bed module 10, and, when the workpiece to be machined is seated, moves and rotates the workpiece to be machined about a single axis in accordance with the machining process.

Additionally, such workpiece module 50 may preferably be configured with a pair of bases 500 described below, a pair of saddles 600, and a rotary table 700.

The first machining module 30 is arranged in the non-machining area of the bed module, independent of the workpiece module, to be capable of moving and rotating about multiple axes and performs machining of the workpiece seated on the workpiece module.

Also, the first machining module 20 may preferably be formed from a first column 210 selected from a pair of columns 200, a first ram 310 selected from a pair of rams 300, and a first spindle 410 selected from a pair of spindles 400.

Second machining module 30 is arranged in the non-machining area of the bed module, independently of the workpiece module and the first machining module, so as to be capable of moving and rotating about multiple axes, and it simultaneously machines the portion of the workpiece installed on the workpiece module that is being machined by the first machining module, or performs machining independently.

Further, the second machining module 30 may preferably be formed from a second column 220 selected from a pair of columns 200, a second ram 320 selected from a pair of rams 300, and a second spindle 420 selected from a pair of spindles 400.

Tool change module 80 stores multiple tools and is arranged on both sides of the non-machining area of the bed module, performing tool change with the first machining module and the second machining module, respectively.

Furthermore, such a tool change module 80 may preferably be formed of a configuration comprising a pair of tool change units 800 described below.

The cover module 90 is arranged in the Bed module to partition the machining area and non-machining area of the Bed module.

Furthermore, the cover module 90 may preferably be formed by a configuration of the cover portion 900 described below.

Such cover module 90 or cover portion 900 can be formed as a multi-cover.

Furthermore, the workpiece module 80 of the machine tool 1 according to an embodiment of the present invention moves in one direction along the fore-aft direction (Y-axis) on the Bed module and rotates in one direction about the left-right direction (X-axis), thereby forming a two-axis system.

Further, in the machine tool (1) of an embodiment of the present invention, the first machining module and the second machining module each move in three directions left-right direction (X-axis), fore-aft direction (Y-axis), and up-down direction (Z-axis) and rotate about two axes based on the left-right direction (X-axis) and fore-aft direction (Y-axis), thereby forming a five-axis system.

Furthermore, the machine tool 1 according to an embodiment of the present invention operates the workpiece module, the first machining module, and the second machining module independently, and by performing machining with two-axis systems (C1, C2), each having a seven-axis system, it simultaneously or independently machines a portion of the large workpiece 2, thereby machining the six faces up-down, left-right, and fore-aft of the large workpiece with a single setting and a single process.

Such axis systems are moved or rotated in the corresponding direction by a transfer unit 1000 that moves the axis systems.

Thus, the machine tool of an embodiment of the present invention, through an optimized layout capable of performing multi-axis two system machining, can machine not only ordinary materials but also large workpieces, performing six-face machining simultaneously or independently, and by overall compacting can maximize space utilization.

As shown in FIGS. 1 to 8, the machine tool 1 according to another embodiment of the present invention includes a bed 100, a pair of columns 200, a pair of rams 300, a pair of spindles 400, a pair of bases 500, a pair of saddles 600, a rotary table 700, a pair of tool change units 800, and a cover.

The bed 100 is partitioned into a machining area 110 and a non-machining area 120. Such a bed is installed on the floor, a base, or a foundation and forms a space in which a pair of columns, a pair of rams, a pair of spindles, a pair of saddles, a rotary table, a pair of tool change units, and a cover are installed.

A pair of columns 200 are arranged in the non-machining area of the bed, facing each other, and each is independently arranged to be movable in a single axial direction.
The pair of rams 300 is arranged with each of the pair of columns such that each can be independently moved in the moving direction of the respective column and in two other axial directions that differ from the column moving direction.

The pair of spindles 400 are arranged at the respective ends of the pair of rams so that each can rotate independently about two axial directions that differ from the moving direction of the pair of rams.

A pair of bases 500 are fixedly arranged in the machining area of the bed so as to face each other.

The pair of saddles 600 are disposed facing each other on the pair of bases and each is arranged to be movable in a single axial direction that is different from the one axial direction of the pair of columns, the two axial directions of the pair of rams, and the two axial directions of the pair of spindles.

Rotary table 700 is disposed to rotate about an axis that is different from the one axial direction of the pair of saddles, the one axial direction of the pair of columns, the two axial directions of the pair of rams, the two axial directions of the pair of spindles, and the one axial direction of the pair of saddles, and the workpiece 2 to be machined by the pair of spindles is seated.

A pair of tool change units 800 each store multiple tools, are fixedly arranged on opposite sides of the movement direction of the pair of columns in the non-machining area of the bed, and, by the movement of the pair of columns, perform tool change with each of the pair of spindles.

Also, in another embodiment of the present invention, the pair of columns of the machine tool 1 each form a single axis moving in the left-right direction, the pair of rams each form two axes moving in the fore-aft and up-down directions, the pair of spindles each form two axes that rotate about the left-right direction or about the fore-aft direction, the pair of saddles each form a single axis moving in the fore-aft direction, and the rotary table forms a single axis that rotates in one direction about the left-right direction.

Also, in an embodiment of the present invention, the machine tool 1 performs machining while moving independently or synchronously along each of the seven axes formed by the pair of columns, the pair of rams, the pair of spindles, the pair of saddles, and the rotary table, thereby machining a portion of a large workpiece simultaneously or independently and machining the six faces (up-down, left-right, fore-aft) of the large workpiece in a single setup and a single process.

The machine tool according to the present invention can maximize space utilization and reduce manufacturing costs by achieving equipment compactness while performing six-face machining of large workpieces through an optimized layout, unlike conventional designs.

As shown in FIGS. 1 to 8, the machine tool 1 according to another embodiment of the present invention includes a first bed 110, a second bed 120, a first column 210 and a second column 220, a first ram 310 and a second ram 320, a first spindle 410 and a second spindle 420, a first base 510 and a second base 520, a first saddle 610 and a second saddle 620, a rotary table 700, a first tool change unit 810 and a second tool change unit 820, a cover unit 900, and a transfer unit 1000.

A first bed 110 is arranged in the non-machining area, and a second bed 120 is installed in the machining area in the fore-aft direction of the first bed.

Thus, the first bed and the second bed are formed longitudinally along the left-right direction and are maintained in an assembled condition as a single integrated body to preserve rigidity, etc.

The first column 210 and the second column 220 are arranged on the upper portion of the first bed so that they face each other in the left-right direction (X1 axis) and each is independently movable in the left-right direction (X1 axis) via the transfer unit 1000.
Thus, the first column and the second column, at the upper portion of the first bed, face each other in the left-right direction and, via a transfer unit that moves each column by a predetermined distance, form a single axis system moving in the left-right direction.

The first ram 310 is arranged to be movable in the fore-aft direction (Y axis) and the up-down direction (Z axis) relative to the first column 210, and the second ram 320 is arranged, independently of the first ram, to be movable in the fore-aft direction (Y1 axis) and the up-down direction (Z1 axis) relative to the second column 220.

Thus, the first ram is arranged and installed on the inner side of the left-right direction (X1 axis) of the first column so as to be movable in the fore-aft direction (Y1 axis) and up-down direction (Z1 axis), and the second ram is arranged on the inner side of the left-right direction (Y1 axis) of the second column so that it faces the first ram along the left-right direction (Y1 axis) and, independent of the first ram, is movable in the fore-aft direction (Y1 axis) and up-down direction (Z1 axis) of the second column 220.

Specifically, the first ram 310 includes a first Slide 311 disposed on the inner side of the left-right direction of the first column 210 so as to move along the up-down direction Z1 axis of the first column, and a first ram body 312 that moves in the fore-aft direction Y1 axis relative to the first Slide; the first Slide moves relative to the first column in the up-down direction via movement portion 1000 to form a single axis system, and the first ram body 312 moves relative to the first Slide in the fore-aft direction via movement portion 1000 to form a single axis system.

Second ram 320 includes a second Slide 321 disposed on the inner side of the left-right direction of the second column 220 so as to face the first Slide and to move along the up-down direction of the second column, and a second ram body 322 that moves in the fore-aft direction relative to the second Slide.

Specifically, second ram 320 includes a second Slide 311 disposed on the inner side of the left-right direction of the second column 220 so as to move along the up-down direction Z2 axis, and a second ram body 322 that moves in the fore-aft direction Y2 axis relative to the second Slide, the second Slide moves relative to the second column in the up-down direction via movement portion 1000 to form a single axis system, and the second ram body 322 moves relative to the second Slide in the fore-aft direction Y2 axis via movement portion 1000 to form a single axis system.

Accordingly, at the upper portion of the first bed of each first column 210 and second column 220, a column moving structure that moves in the left-right direction (X1 axis, X2 axis), fore-aft direction (Y1 axis, Y2 axis), and up-down direction (Z1 axis, Z2 axis) along three respective axes is formed.

The left spindle 410 is removably mounted with the first tool 411 and is arranged at the tip of the first ram so as to be capable of rotating about a fore-aft direction reference or a left-right direction reference (A1 axis, B1 axis).

The right spindle 420 is detachably mounted with the second tool 421 and is arranged at the tip of the second ram so as to be capable of rotating about a fore-aft direction reference and a left-right direction reference (A2 axis, B2 axis) independently of the first spindle.

Meanwhile, the first spindle 410 and the second spindle 420 may each be formed as an orthogonal milling head that rotates about two axes (A axis, B axis).

In this manner, the first spindle having A1 and B1 axes and the second spindle having A2 and B2 axes are formed as a universal head possessing two rotary axes.

The first base (510) and the second base (520) are fixedly arranged on the upper portion of the second bed (120) in the left-right direction (X axis) so that they face each other.

The first saddle 610 is arranged on the upper portion of the first base so as to be movable in the fore-aft direction V1 axis.

The second saddle 620 is arranged on the upper portion of the second base to be movable in the fore-aft direction (V1) axis.

The rotary table 700 is arranged between the first saddles and the second saddles so as to be rotatable about the W1 axis with respect to the left-right direction.

As shown in FIG. 2 and FIG. 3, the rotary table 700 of the machine tool 1 according to another embodiment of the present invention includes a first coupling part 710 rotatably coupled to the first saddle 610, a second coupling part 720 rotatably coupled to the second saddle 620, a seating portion 730 formed extending between the first coupling part and the second coupling part in which the workpiece 2 to be machined is seated, and a clamping portion 740 for clamping the workpiece seated in the seating portion.

As such, the rotary table is stably formed and rotates with respect to the first saddles and the second saddles, and, as the rotary table is installed on the first saddles and the second saddles, one axis system that moves the workpiece along a V axis parallel to the Y axis and one axis system that rotates the workpiece independently of the first spindle and the second spindle are provided.

Also, as shown in FIG. 1, FIG. 6, and FIG. 7, the machine tool 1 of another embodiment of the present invention includes a first tool change unit 810 that stores multiple tools, is fixedly arranged on one side of the first bed, and, by moving the first column, the first ram, and the first spindle, performs tool change with the first spindle; and a second tool change unit 820 that stores multiple tools, is fixedly arranged on the opposite side of the first bed so as to face the first tool change unit in the left-right direction, and, by moving the second column, the second ram, and the second spindle, performs tool change with the second spindle.

As such, the first tool change unit that performs tool change for the left spindle is arranged on the travel area of the first column of the first bed, and the second tool change unit that performs tool change for the right spindle is arranged independently of the first tool change unit on the travel area of the second column of the second bed, whereby the left spindle and right spindle can not only perform the same machining independently or simultaneously, but also minimize the time and distance required for tool change to promote miniaturization of the machine tool, reduce non-machining time such as tool change to improve productivity, and, with the first and second tool change units stably installed on the first bed, maximize the safety of the machine tool.

The first column and the second column each form an independent single-axis system moving in the left-right direction (X-axis), the first ram and the second ram each form two independent axis systems (A-axis, B-axis) that move independently in the fore-aft direction (Y-axis) and the up-down direction (Z-axis), the first spindle and the second spindle each form independent two-axis systems that rotate about the left-right direction or about the fore-aft direction, the first saddle and the second saddle each form an independent single-axis system that moves in the fore-aft direction (V1-axis), and the rotary table forms a single-axis system (W-axis) that rotates in one direction about the left-right direction.

According to another embodiment of the present invention, the machine tool (1) comprises a first system (C1) having a first column, a first ram, a left spindle, first saddles, second saddles and a rotary table, which together provide an independent 7-axis coordinate system (X1, Y1, Z1, A1, B1, V1, W); and a second system (C2) having a second column, a second ram, a right spindle, first saddles, second saddles and a rotary table, which is independent of the first system (C1) and provides an independent 7-axis coordinate system (X2, Y2, Z2, A2, B2, V1, W). Through these systems, a portion of a large workpiece is machined simultaneously or independently, enabling the six faces (up-down, left-right, fore-aft) of the large workpiece to be processed in a single set-up and a single process.

These first column, second column, first slide, first ram body, second slide, second ram body, first saddles, and second saddles are moved by each transfer unit 1000, which includes a ballscrew extending in the moving direction of the respective coordinate system and an LM guide installed spaced apart from the ballscrew by a predetermined gap, and can move stably, reducing vibration and noise generated during movement, thereby improving machining precision and facilitating operator convenience.

As described, the machine tool of the present invention, through an optimized layout capable of performing multiaxis two-system machining, can precisely and rapidly execute six-face machining with two spindles either simultaneously or independently while avoiding interference with the table that clamps the workpiece with the two spindles, and, by minimizing the distance between the two spindles to enlarge the machining envelope and thus maximize the machining area for large workpieces, enhances the versatility and productivity of the machine tool, maximizes its safety and reliability, and, through the optimized layout, achieves six-face machining of large workpieces while, unlike conventional designs, promoting equipment compactness to maximize space utilization, reduce manufacturing cost, and minimize vibration and noise to improve machining precision.

Although the detailed description of the present invention above has been explained with reference to a preferred embodiment, a person skilled in the art or one having ordinary knowledge in the relevant technical field will understand that the present invention may be variously modified and changed within a range that does not depart from the concepts and technical scope of the present invention recited in the following claims.

Accordingly, the technical scope of the present invention is not limited to the content described in the detailed description of the specification, but must be defined by the claims.

### [Description of Main Reference Numerals of Drawings]

1 : Machine tool
10 : Bed module
20 : First processing module
30 : Second processing module
50 : Workpiece module
80 : Tool change module
90 : Cover module
100: Bed
110 : First bed
120 : Second bed
200 : A pair of columns
210 : First column
220 : Second column
300 : A pair of rams
310 : First ram
320 : Second ram
400 : A pair of spindles
410 : left spindle
420 : right spindle
500 : A pair of bases
510 : First base
520 : Second base
600 : A pair of saddles
610 : First saddle
620 : Second saddle
700 : Rotary table
800 : A pair of tool change units
810 : First tool change unit
820 : Second tool change unit
900 : Cover
1000 : Transfer unit
C1 : First system
C2 : Second system

## Claims

1. A machine tool comprising:
a bed module partitioned into a machining area and a non-machining area;
a workpiece module arranged in the machining area of the bed module and configured to be disposed on a workpiece to be machined and to move and rotate the workpiece about a single axis in accordance with a machining process;
a first processing module arranged in the non-processing area of the bed module so as to be movable and rotatable along multiple axes independently of the workpiece module and performing processing of the workpiece disposed on the workpiece module; and
a second processing module arranged in the non-processing area of the bed module so as to be movable and rotatable along multiple axes independently of the workpiece module and the first processing module and performing processing of the workpiece disposed in the workpiece module simultaneously processing the part processed by the first processing module or separately and
independently processing.

2. The machine tool of claim 1, further comprising a tool change module that stores a plurality of tools and is disposed on each side of the non-processing area of the bed module to perform tool change with the first processing module and the second processing module, respectively.

3. The machine tool of claim 1, further comprising a cover module disposed on the bed module to partition the machining area and the non-machining area of the bed module. [Claim 4] The machine tool of claim 1, wherein the workpiece module is configured to move in one fore-aft direction on the bed module and to rotate about an axis orthogonal to the left-right direction to form two axis systems.

4. The machine tool of claim 4, wherein the first machining module and the second machining module each move in three directions of left-right, fore-aft, and up-down, and rotate about the left-right and fore-aft axes in two directions to form a five axes system.

5. The machine tool of claim 5, wherein the workpiece module, the first machining module, and the second machining module each operate independently to perform two-system machining each having seven axes, thereby machining a portion of a large workpiece simultaneously or independently so that the six faces (up-down, left-right, front-back) of the large workpiece are machined with a single set-up and a single process.

6. A machine tool comprising:
a bed partitioned into a machining area and a non-machining area;
a pair of columns arranged in the non-machining area of the bed, facing each other and each independently movable in one axial direction;
a pair of rams each mounted on one of the pair of columns in which each independently movable in two axial directions different from the movement direction of the respective column;
a pair of spindles, each positioned at the distal end of one of the pair of rams in which each independently rotatable in two axial directions different from the movement direction of the respective ram;
a pair of bases fixedly arranged facing each other in the machining area of the bed;
a pair of saddles, each mounted on the pair of bases, facing each other and each independently movable in one axial direction different from the one axial direction of the pair of columns, the two axial directions of the pair of rams and the two axial directions of the pair of spindles; and
a rotary table mounted on the pair of saddles, rotatable in one axial direction different from the one axial direction of the pair of columns, the two axial directions of the pair of rams, the two axial directions of the pair of spindles, and the one axial direction of the pair of saddles, on which a workpiece to be machined by the pair of spindles is seated.

7. The machine tool of claim 7, further comprising a pair of tool changing units, each storing a plurality of tools and fixedly positioned on both sides of the movement direction of the pair of columns in the non-processing area of the bed, respectively, and performing tool changing with the pair of spindles through the movement of the pair of columns.

8. The machine tool of claim 7, wherein the pair of columns each form a single axis system moving in the left-right direction, the pair of rams each form two axis systems moving in the fore-aft and up-down directions, the pair of spindles each form two axis systems rotating about the left-right direction or about the fore-aft direction, the pair of saddles each form a single axis system moving in the fore-aft direction, and the rotary table forms a single axis system rotating in one direction about the left-right direction.

9. The machine tool of claim 9, wherein the pair of columns, the pair of rams, the pair of spindles, the pair of saddles, and the rotary table are each formed according to seven axes and move independently or synchronously to perform machining, thereby machining a portion of a large workpiece simultaneously or independently and performing machining of the six faces (upper, lower, left, right, front, and rear) of the large workpiece in a single setup and a single process.

10. A machine tool comprising:
a first bed arranged in a non-machining area and a second bed installed in the machining area in a fore-aft direction relative to the first bed;
a first column and a second column arranged on the upper side of the first bed so as to face each other in a left-right direction and each independently movable in a left-right direction;
a first ram arranged on the first column so as to be movable in fore-aft and up-down directions and a second ram arranged on the second column so as to be independently movable in fore-aft and up-down directions from the first ram;
a first spindle detachably mountable with a first tool and arranged at the distal end of the first ram to rotate about a fore-aft axis or a left-right axis and a second spindle detachably mountable with a second tool and arranged at the distal end of the second ram to rotate about a fore-aft axis and a left-right axis independently of the first spindle;
a first base and a second base fixedly disposed on the upper side of the second bed so as to face each other in a left-right direction;
a first saddle mounted on the upper side of the first base so as to be movable in a fore-aft direction and a second saddle mounted on the upper side of the second base so as to be movable in a fore-aft direction; and a rotary table positioned between the first and second saddles so as to be rotatable about a left-right axis.

11. The machine tool of claim 11, wherein the first ram is installed on the inner side of the first column in the left-right direction, and the second ram is installed on the inner side of the second column in the left-right direction so as to face each other along the left-right direction.

12. The machine tool of claim 11, wherein the first ram includes a first slide disposed on the inner side of the left-right direction of the first column so as to move along the up-down direction of the first column, and a first ram body that moves in a fore-aft direction relative to the first slide, wherein the second ram includes a second slide disposed on the inner side of the left-right direction of the second column so as to face the first slide, and a second ram body that moves in a fore-aft direction relative to the second slide.

13. The machine tool of claim 11, further comprising a first tool change unit that stores a plurality of tools and is fixedly arranged on one side of the first bed, wherein the first tool change unit performs tool change with the first spindle by movement of the first column, the first ram, and the first spindle, and a second tool change unit that stores a plurality of tools and is fixedly arranged on the opposite side of the first bed so as to face the first tool change unit in a left-right direction, wherein the second tool change unit performs tool change with the second spindle by movement of the second column, the second ram, and the second spindle.

14. The machine tool of claim 11, wherein the first column and the second column each form an independent single-axis system moving in a left-right direction, the first ram and the second ram each form an independent two-axis system moving independently in a fore-aft direction and an up-down direction, the first spindle and the second spindle each form an independent two-axis system rotating about a left-right axis or about a fore-aft axis, the first saddle and the second saddle each form an independent single-axis system moving in a fore-aft direction, and the rotary table forms a single-axis system rotating in one direction about a left-right axis.

15. The machine tool of claim 15, wherein the first column, first ram, first spindle, first saddles, second saddles and the rotary table are configured in a first system having an independent seven-axis coordinate system, and the second column, second ram, second spindle, first saddles, second saddles and the rotary table are configured in a second system having an independent seven-axis coordinate system that is independent of the first system, so that a portion of a large workpiece can be machined simultaneously or independently, thereby performing machining of the six faces-upper, lower, left, right, front, and rear-of the large workpiece in a single setup and a single process.

16. The machine tool of claim 11, wherein the rotary table comprises a first coupling part rotatably coupled to the first saddle; a second coupling part rotatably coupled to the second saddle; a seating part extending mounted between the first and second coupling part wherein a workpiece to be machined is seated; and a clamping part for clamping the workpiece seated on the seating part.
